Europäisches Patentamt

European Patent Office

Office européen des brevets

(11) Veröffentlichungsnummer : **0 418 847 B1**

(12) **EUROPÄISCHE PATENTSCHRIFT**

(45) Veröffentlichungstag der Patentschrift :
**28.10.92 Patentblatt 92/44**

(21) Anmeldenummer : **90117997.8**

(22) Anmeldetag : **19.09.90**

(51) Int. Cl.⁵ : **B01J 20/34,** B01J 20/14,
B01D 41/00

(54) **Anlage für die Aufbereitung eines hauptsächlich aus Kieselgur bestehenden Filtrationsschlammes und Verfahren zum Betrieb der Anlage.**

(30) Priorität : **20.09.89 DE 3931352**
**27.10.89 DE 3935952**
**27.10.89 DE 3935953**

(43) Veröffentlichungstag der Anmeldung :
**27.03.91 Patentblatt 91/13**

(45) Bekanntmachung des Hinweises auf die
Patenterteilung :
**28.10.92 Patentblatt 92/44**

(84) Benannte Vertragsstaaten :
**BE DE ES FR GB NL**

(56) Entgegenhaltungen :
**DE-A- 2 519 669**
**DE-A- 2 717 442**
**FR-A- 2 586 588**
**NL-C- 77 051**
**US-A- 1 513 622**

(73) Patentinhaber : **TREMONIS GESELLSCHAFT
MIT BESCHRÄNKTER HAFTUNG
BRAUEREI-NEBENERZEUGNISSE
Westfälische Strasse 251
W-4600 Dortmund 12(Brackel) (DE)**

(72) Erfinder : **Weiergräber, Peter
Albrecht Dürerstr. 34
W-4006 Erkrath 1 (DE)**

(74) Vertreter : **Andrejewski, Walter, Dr. et al
Patentanwälte Andrejewski, Honke & Partner
Postfach 10 02 54 Theaterplatz 3
W-4300 Essen 1 (DE)**

EP 0 418 847 B1

Jouve, 18, rue Saint-Denis, 75001 PARIS

# Beschreibung

Die Erfindung betrifft eine Anlage für die Aufbereitung eines hauptsächlich aus Kieselgur bestehenden Filtrationsschlammes, der Kieselgur einer vorgegebenen Kornverteilung, organische Bestandteile und ggf. geblähtes Perlite oder Vermiculite enthält, - mit

einer Aufgabeeinrichtung für den in ausreichend feiner Verteilung aufzugebenden Filtrationsschlamm,

einem Stromtrocknungsaggregat für die Trocknung und Dispergierung des aufgegebenen Filtrationsschlammes in einem Trocknungsstrom,

einem aus einem Zyklonaggregat und einem Feststoff-Filter bestehenden Abscheideraggregat für die Abscheidung des körnigen Trockengutes,

einer Hochtemperaturbehandlungskammer für die Behandlung des Trockengutes in einem Behandlungsgasstrom,

einem Heißgaszyklonaggregat für die Abscheidung des behandelten Gutes aus dem Behandlungsgasstrom und

einer Kühleinrichtung für das abgeschiedene, behandelte Gut,

wobei die Einrichtungen bzw. Aggregate in der beschriebenen Reihenfolge in ein Fließschema eingebunden sind. Aufbereitung meint zumindest eine so weitgehende Behandlung, daß die problemlose Entsorgung, z. B. auf normalen Deponien, möglich ist. Der Begriff umfaßt aber auch eine Regenerierung, die es erlaubt, das behandelte Gut als Filterhilfsmittel einzusetzen. Die Erfindung betrifft fernerhin ein Verfahren zum Betrieb einer solchen Anlage. - Kieselgur bezeichnet im Rahmen der Erfindung einen mineralischen Rohstoff (vgl. Römpps Chemie-Lexikon, 1973, 1770), der als Filterhilfsmittel in den verschiedensten Industrien eingesetzt werden kann. Insbesondere in der Zuckerindustrie, in Brauereien, in der chemischen und pharmazeutischen Industrie werden solche Filterhilfsmittel eingesetzt. Neben den verschiedenen Kieselguren kann der Filtrationsschlamm auch andere Filtrationshilfsmittel in der inerten Trockenmasse enthalten. Dazu gehören insbesondere geblähtes Perlite bzw. geblähtes Vermiculite. Der Filtrationsschlamm enthält außerdem die bei der Filtration abgeschiedenen Substanzen. Sie sind hauptsächlich organischer Natur und machen die Aufbereitung erforderlich. Die Mengen an Perlite bzw. an Vermiculite belaufen sich üblicherweise auf einige wenige Gewichtsprozente. Sie sorgen in dem Filtrationshilfsmittel für einen qualitativen Ausgleich gegenüber erhöhter Partikelfeinheit durch mechanische Beanspruchungen. Kieselgele, die im Kontaktverfahren mit Kieselgur verwendet werden, können außerdem in dem Filtrationsschlamm enthalten sein. Der anfallende Filtrationsschlamm kann sich daher in seiner Zusammensetzung, je nach Provenienz, unterscheiden.

- Erfahrungsgemäß fällt ein Filtrationsschlamm an, der hauptsächlich aus Kieselgur besteht. Unter Dispergierung versteht man eine "Auflösung" des Filtrationsschlammes bis zum Primärkorn. Handelt es sich bei dem Filtrationsschlamm um einen solchen, der aus einem Brauerei-Filterhilfsmittel entstanden ist, so führt das erfindungsgemäße Verfahren der Aufbereitung zu einem aufbereiteten Gut, welches wiederum als Brauerei-Filterhilfsmittel einsetzbar ist. Insoweit betrifft die Erfindung gleichsam ein Kreislaufverfahren.

Im Rahmen der aus der Praxis bekannten Maßnahmen, von denen die Erfindung ausgeht, beobachtet man eine störende Umwandlung der in der Kieselgur enthaltenden nichtkristallinen Kieselsäure zu kristalliner Kieselsäure. Das beeinträchtigt oder verhindert die Wiederverwendung des aufbereiteten Gutes als Filtrationshilfsmittel. Im übrigen ist bei der bekannten Anlage die Funktionssicherheit verbesserungsbedürftig. Es zeigen sich Störungen durch Agglomeratbildung und störende Ablagerungen in dem Filteraggregat, über welches das Trocknungsgas abgezogen wird. Besonders ausgeprägt sind diese Störungen, wenn in ein und derselben Anlage Filtrationsschlamm unterschiedlicher Provenienz behandelt wird. Die bekannten Maßnahmen sind im übrigen energetisch aufwendig und verlangen eine sorgfältige Reinigung der Gase, die an die Umgebung abgegeben werden.

Der Erfindung liegt die Aufgabe zugrunde, eine Anlage des eingangs beschriebenen grundsätzlichen Aufbaus so weiter auszubilden, daß eine einfache Aufbereitung des Filtrationsschlammes, aber auch eine Regenerierung bis zur Wiedergewinnung eines aus Kieselgur bestehenden Filterhilfsmittels funktionssicher möglich sind, ohne daß störende Veränderungen der Kieselgur, auch in bezug auf die Körnungszusammensetzung, in Kauf genommen werden müssen. Darüber hinaus soll die Anlage so eingerichtet werden, daß sie mit geringem Energieaufwand arbeitet.

Zur Lösung dieser Aufgabe lehrt die Erfindung, daß die Hochtemperaturbehandlungskammer als Wirbelstromreaktor ausgeführt ist, der einen vertikalen Reaktionsraum mit kreisförmigem Querschnitt, eine koaxial unter dem Reaktionsraum angeordnete Drallerzeugungseinrichtung für die Einführung des Behandlungsgasstromes in eine koaxial über der Reaktionskammer angeordnete und in diese hineinragende Einführungslanze für das Trockengut aufweist, daß der Hochtemperaturbehandlungkammer ein Behandlungsgaserzeuger vorgeschaltet ist, der eine Brennkammer, eine Einrichtung für die Zuführung von flüssigen und/oder gasförmigen Brennstoffen, eine Einrichtung für eine Druckluftzuführung und eine Einrichtung für eine Frischluftzuführung aufweist und der einen Behandlungsgasstrom ausreichender Störmungsenergie mit ausreichender Temperatur und ausreichendem Sauerstoffgehalt zur Verbrennung der organischen Bestandteile besitzt, daß der Heißgaszyklon mit einer Auskleidung aus feuerfester Keramik versehen und für eine Feststoffabscheidung von etwa 80 % eingerichtet ist, wobei dem Heißgaszyklon eine Abschreckkühleinrichtung für die abgeschiedenen Feststoffe nachgeschaltet ist, die zwischen dem Heißgaszyklon und der Kühleinrichtung angeordnet ist, daß der Heißgasabzug des Heißgaszyklons über ein Überführungsleitungssystem an das Stromtrocknungsaggregat angeschlossen und das aus dem Heißgaszyklon abgehende Heißgas mit seinem Feststoffanteil von etwa 20 % als Trocknungsgasstrom in das Stromtrocknungsaggregat einführbar ist und daß das Überführungsleitungssystem eine mit einer Prozeßsteuereinrichtung zusammenwirkende Einspritz-Wasserkühlung aufweist, mit der die Temperatur des Trocknungsgasstromes auf eine Einführungstemperatur einstellbar ist, die niedrig genug ist, um eine Verdampfung der im Filterschlamm mitgeführten Bestandteile im Stromtrocknungsaggregat zu verhindern.

Die Erfindung beruht auf der Erkenntnis, daß eine Anlage für die Aufbereitung von Filtrationsschlamm bzw. für die Gewinnung eines aus Kieselgur bestehenden Filterhilfsmittels des eingangs beschriebenen, grundsätzlichen Aufbaus so ausgelegt und eingerichtet werden muß, daß die organischen Bestandteile praktisch restlos in die Hochtemperaturbehandlungskammer gelangen und dort möglichst vollständig verbrannt werden. Zur Erfindung gehört insoweit fernerhin die Erkenntnis, daß in dem Stromtrocknungsaggregat ein Verdampfen der organischen Bestandteile nicht stattfinden darf, wenn anders im Feststofffilter störende Ablagerungen auftreten und eine aufwendige zusätzliche Reinigung der abziehenden Abgase erforderlich ist. Andererseits fällt der Filtrationsschlamm mit unterschiedlichen Gehalten an organischen Bestandteilen an und folglich entsteht durch deren Verbrennung ein aus der Hochtemperaturbehandlungskammer bzw. dem Heißgaszyklon abgehendes Behandlungsgas (Rauchgas) unterschiedlicher und auch sehr hoher Temperatur. Dieses kann erfindungsgemäß nichtsdestoweniger energiesparend als Trocknungsgasstrom in das Stromtrocknungsaggregat eingeführt werden, ohne daß wegen zu hoher Temperatur eine Verdampfung der organischen Bestandteile im Stromtrocknungsaggregat stattfindet, weil erfindungsgemäß über die Einspritzwasserkühlung die Temperatur des Trocknungsgasstromes in extrem kurzen Zeiten entsprechend eingestellt werden kann. Überraschenderweise trägt der Feststoffgehalt, den der Trocknungsgasstrom mitführt, dazu bei, daß störende Konglomerate nicht entstehen oder aufgelöst werden. Die mittlere Verweilzeit des Trockengutes in der Hochtemperaturbehandlungskammer ist kurz. Sie läßt sich so einstellen, daß eine Umwandlung der nichtkristallinen Kieselsäure in kristalline Kieselsäure nicht zu befürchten ist. Die Abschreckkühlung des behandelten Gutes, welches den Heißgaszyklon verläßt, verhindert darüber hinaus störende Umwandlungen der nichtkristallinen Kieselsäure in kristalline Kieselsäure. Zwar nimmt das Trockengut bei der Behandlung in der Hochtemperaturbehandlungskammer unter Umständen ein lavaartiges Fließverhalten an. Die Abschreckung stellt jedoch auch sicher, daß das behandelte Gut unmittelbar nach Verlassen des Heißgaszyklons mit üblichen Einrichtungen förderbar und manipulierbar ist. Im Ergebnis wird durch die Kombination der beschriebenen Maßnahmen erreicht, daß eine einfache Aufbereitung des Filtrationsschlammes für Entsorgungszwecke, aber auch eine Regenerierung bis zur Gewinnung eines aus Kieselgur bestehenden Filterhilfsmittels aus einem anfallenden, mechanisch entwässerten Filtrationsschlamm betriebssicher möglich ist, ohne daß störende Veränderungen der Kieselgur, auch bezüglich des Körnungsaufbaus, in Kauf genommen werden müßten. Die erfindungsgemäße Anlage arbeitet mit sehr geringem Energieverbrauch.

Im einzelnen bestehen im Rahmen der Erfindung mehrere Möglichkeiten der weiteren Ausbildung und Auslegung der erfindungsgemäßen Anlage. Eine bevorzugte Ausführungsform der Erfindung, die sich dadurch auszeichnet, daß die Verbrennung der organischen Bestandteile sehr vollständig durchgeführt werden kann, ist dadurch gekennzeichnet, daß die Hochtemperaturbehandlungskammer einen im Vertikalschnitt birnenförmigen Reaktionsraum sowie eine Drallerzeugungseinrichtung und einen Gasaustritt mit demgegenüber reduziertem Querschnitt aufweisen. Die Hochtemperaturbehandlungskammer kann mit einem Behandlungsgas betreibbar sein, welches mit einer oberhalb der Zündtemperatur in der Hochtemperaturbehandlungskammer liegenden Temperatur von etwa 600 °C in die Hochtemperaturbehandlungskammer eintritt. Der Heißgaszyklon besitzt zweckmäßigerweise eine Abschreckkühleinrichtung, die als wassergekühlte Schurre oder Wendel eingerichtet ist. Wesentlich ist, daß das behandelte Gut bei Austritt aus dem Heißgaszyklon sehr kurzfristig von der Austrittstemperatur, die bei etwa 800 °C liegt, auf eine Temperatur von 550 °C oder darunter abgekühlt wird. Die Einspritzwasserkühlung besitzt zweckmäßigerweise einen Regelkreis für die Temperatur des Trocknungsgasstromes, der ausreichend empfindlich ist und schnell reagiert. Im Rahmen der Erfindung liegt es, die Anordnung so zu treffen, daß das Stromtrocknungsaggregat im Bereich vor dem Zyklonaggregat eine Prallumlenkung aufweist, an der Agglomerate durch Prall zerkleinert werden.

Eine erfindungsgemäße Anlage kann in weiten Grenzen so gesteuert und geregelt werden, daß eine einfache und funktionssichere Aufbereitung des Filtrationsschlammes und die Gewinnung eines Filterhilfsmittels, welches allen Anforderungen genügt, auch dann möglich sind, wenn mit Filtrationsschlamm sehr unterschiedlicher Provenienz und Zusammensetzung als Ausgangsmaterial gearbeitet wird.

Eine bevorzugte Ausführungsform der Erfindung ist in diesem Zusammenhang in bezug auf den Betrieb einer Anlage dadurch gekennzeichnet, daß bei Einsatz von Filtrationsschlämmen unterschiedlicher Provenienz, die z. B. aus unterschiedlichen Betrieben abgezogen werden, die Filtrationsschlämme durch Mischung auf eine anlagentypische Zusammensetzung normiert und danach in das Stromtrocknungsaggregat eingeführt werden.

Im folgenden wird die Erfindung anhand einer lediglich ein Ausführungsbeispiel darstellenden Zeichnung ausführlicher erläutert. Es zeigen

Fig. 1 das Schema einer erfindungsgemäßen Anlage mit Fließbild,

Fig. 2 in dem vergrößerten Ausschnitt A aus dem Gegenstand nach Fig. 1 Einzelheiten der Hochtemperaturbehandlungskammer,

Fig. 3 einen Schnitt in Richtung B-B durch den Gegenstand nach Fig. 2.

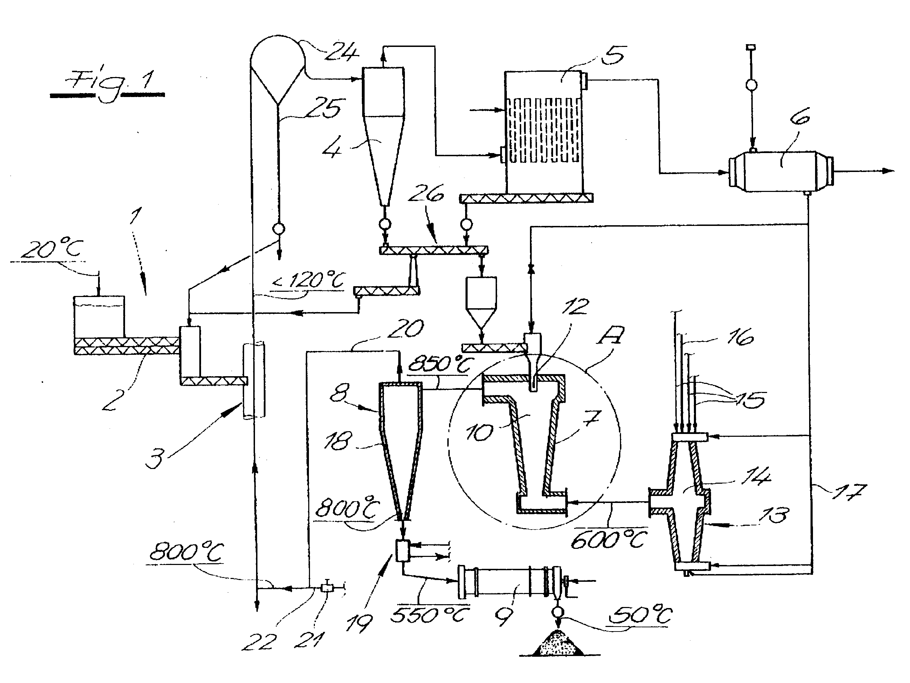

Die in der Fig. 1 dargestellte Anlage ist für die Aufbereitung eines hauptsächlich aus Kieselgur bestehenden mechanisch entwässerten Filtrationsschlammes bestimmt. Die Aufbereitung kann bis zur vollständigen Regenerierung geführt werden. Der Filtrationsschlamm besteht aus Kieselgur einer vorgegebenen Kornverteilung, den bei der Filtration abgeschiedenen Substanzen und ggf. geblähtem Perlite oder Vermiculite bzw. Kieselgelen.

In ihrem grundsätzlichen Aufbau besteht die Anlage zunächst aus einer Aufgabeeinrichtung 1 für den aufzugebenden Filtrationsschlamm. Das ist im Schema der Fig. 1 links erkennbar. Es versteht sich, daß die Anordnung so getroffen ist, daß über Förderschnecken 2 oder andere Förderer der aufzugebende Filtrationsschlamm hinreichend feinteilig in das Stromtrocknungsaggregat 3 eingeführt wird. Dieses arbeitet mit einem von unten nach oben strömenden Trocknungsgasstrom, dessen Strömungsgeschwindigkeit groß genug ist, um den feinteilig aufgegebenen Filtrationsschlamm mitzuführen. Zum grundsätzlichen Aufbau der Anlage gehören fernerhin ein Zyklonaggregat 4 und ein Feststoffilter 5. Beide gemeinsam bilden ein Abscheideraggregat 4, 5 für die Abscheidung des körnigen Trockengutes. Das Trocknungsgas wird danach als Abgas über einen Wärmetauscher 6 geführt, der der Aufheizung der in die Anlage einzuführenden Frischluft dient, und kann nach entsprechender Reinigung in die Atmosphäre entlassen werden.

Von besonderer Bedeutung für die erfindungsgemäße Anlage ist die Hochtemperaturbehandlungskammer 7 für die Behandlung des Trockengutes in einem Behandlungsgasstrom. Ein Heißgaszyklonaggregat 8 für die Abscheidung des behandelten Gutes aus dem Behandlungsgasstrom ist nachgeschaltet. Im übrigen ist eine Kühleinrichtung 9 für das abgeschiedene, behandelte Gut vorgesehen. Die Einrichtungen bzw. Aggregate sind in der beschriebenen Reihenfolge in das Verfahren so eingebunden, wie es das Fließschema mit den eingetragenen Pfeilen verdeutlicht. Auch die im Rahmen der Erfindung wesentlichen Temperaturbereiche und Temperaturen wurden in das Fließschema eingetragen. Insoweit bedarf das Fließschema im einzelnen nicht der Beschreibung. Das behandelte Gut kann ohne weiteres einer Deponie aufgegeben werden. Die Behandlung kann aber auch so weit geführt werden, daß das behandelte Gut als Filterhilfsmittel einsetzbar ist.

Aus einer vergleichenden Betrachtung der Fig. 1 bis 3 entnimmt man, daß die Hochtemperaturbehandlungskammer 7 als Wirbelstromreaktor ausgeführt ist, der einen vertikalen Reaktionsraum 10 mit kreisförmigem Querschnitt, eine koaxial unter dem Reaktionsraum 10 angeordnete Drallerzeugungseinrichtung 11 für die Einführung des Behandlungsgasstromes und eine koaxial über der Reaktionskammer 10 angeordnete und in die Reaktionskammer 10 hineinragende Einführungslanze 12 für das Trockengut aufweist. Der Hochtemperaturbehandlungskammer 7 ist ein Behandlungsgaserzeuger 13 vorgeschaltet. Der Behandlungsgaserzeuger 13 besitzt eine Brennkammer 14, eine Einrichtung 15 für die Zuführung von flüssigen und/oder gasförmigen Brennstoffen, eine Einrichtung 16 für eine Druckluftzuführung und eine Einrichtung 17 für eine Frischluftzuführung. Der Behandlungsgaserzeuger 13 ist so ausgelegt, daß ein Behandlungsgasstrom ausreichender Strömungsenergie mit ausreichender Temperatur und ausreichendem Sauerstoffgehalt zur Verbrennung der organischen Bestandteile in die Hochtemperaturbehandlungskammer 7 eintritt. Das Heißgaszyklonaggregat besitzt eine Auskleidung 18 aus feuerfester Keramik. Es ist für eine Feststoffabscheidung von etwa 80 % eingerichtet. Dem Heißgaszyklonaggregat ist eine Abschreckkühleinrichtung 19 für die abgeschiedenen Feststoffe nachgeschaltet. Diese ist zwischen dem Heißgaszyklonaggregat 8 und der schon beschriebenen Kühleinrichtung 9 angeordnet. Der Heißgasabzug des Heißgaszyklonaggregates 8 ist über ein Überführungsleitungssystem 20 an das Stromtrocknungsaggregat 3 angeschlossen. Das aus dem Heißgaszyklonaggregat abgehende Heißgas mit seinem Feststoffanteil von etwa 20 % ist als Trocknungsgasstrom in das Stromtrocknungsaggregat 3 einführbar. Dabei sind jedoch besondere Maßnahmen verwirklicht. Die Anordnung ist nämlich so getroffen, daß das Überführungsleitungssystem 20 eine mit einer Prozeßsteuereinrichtung 21 zusammenwirkende Einspritz-Wasserkühlung 22 besitzt, mit der die Temperatur des Trocknungsgasstromes auf eine Einführungstemperatur einstellbar ist, die niedrig genug ist, um eine Verdampfung der im Filterschlamm mitgeführten organischen Bestandteile im Stromtrocknungsaggregat 13 zu verhindern.

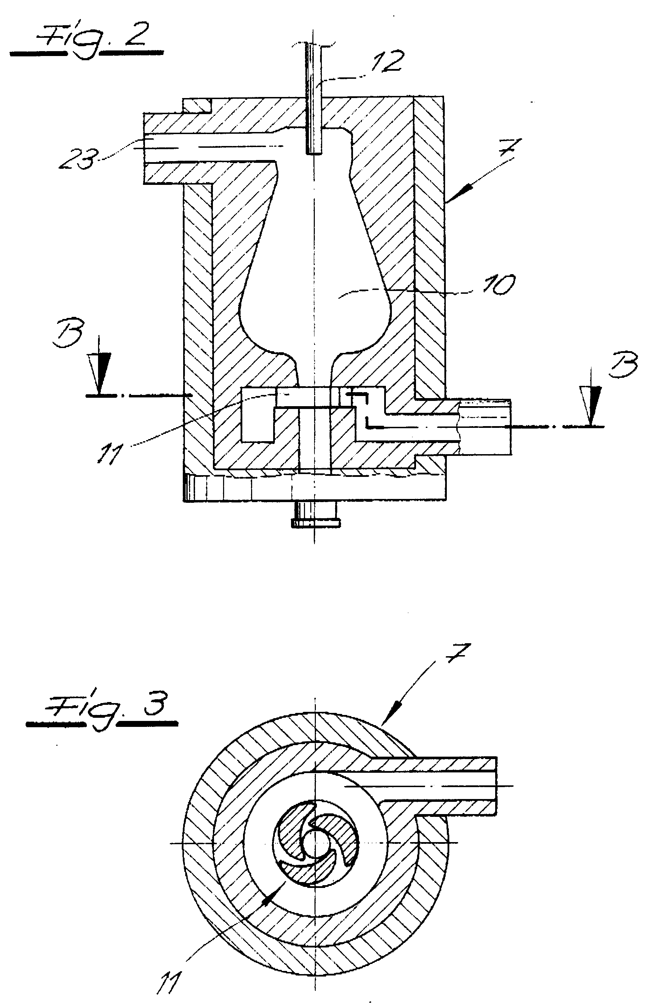

Aus den Fig. 2 und 3 entnimmt man, daß die Hochtemperaturbehandlungskammer 7 einen im Vertikalschnitt birnenförmigen Reaktionsraum 10 sowie eine Drallerzeugungseinrichtung 11 und einen Gasaustritt 23 mit demgegenüber reduziertem Querschnitt aufweist. Die Hochtemperaturbehandlungskammer 7 ist für eine in das Fließschema eingetragene Behandlungstemperatur eingerichtet. Der Behandlungsgasstrom tritt mit einer Temperatur von etwa 600 °C, jedenfalls aber mit einer Temperatur, die oberhalb der Zündtemperatur der zu verbrennenden, organischen Bestandteile liegt, in die Hochtemperaturbehandlungskammer 7 ein. Nach bevorzugter Ausführung der Erfindung wird die Hochtemperaturbehandlungskammer 7 mit Unterdruck betrieben. Sie kann auch als konische Kammer gestaltet sein, wie es in der Fig. 1 dargestellt wurde.

Die schon erwähnte Abschreckkühlvorrichtung 19 ist als wassergekühlte Schurre oder Wendel ausgerüstet. Es versteht sich, daß die Einspritzwasserkühlung 22 einem Regelkreis für die Temperatur des Trocknungsgases angehört. Im oberen Teil des Stromtrocknungsaggregates erkennt man vor dem Zyklonaggregat 4 eine Prallumlenkung 24, in der eine Agglomeratzerstörung durch Prallzerkleinerung stattfinden kann. Das hier aus dem Trocknungsgasstrom ausfallende Gut gelangt über die eingezeichnete Leitung 25 zur Aufgabeeinrichtung 1 zurück. Das aus dem Zyklonaggregat 4 abgeschiedene Trockengut sowie das aus dem Feststofffilter 5 abgeschiedene Trockengut werden über die in der Fig. 1 dargestellten Fördereinrichtungen 26 in die Hochtemperaturbehandlungskammer 7 eingeführt. Ein Teilstrom kann auch zur Aufgabeeinrichtung 1 zurückgeführt werden.

Die Hochtemperaturbehandlungskammer 7, die auch Drallstromreaktor bezeichnet wird, ist zweckmäßigerweise im oberen Teil mit einer (nicht gezeichneten) Einrichtung versehen, die es erlaubt, Gasstromstöße mehr oder weniger tangential in Wandnähe in die Hochtemperaturbehandlungskammer 7 gleichsam einzuschießen. Auf diese Weise wird eine Abreinigung der Wand der Hochtemperaturbehandlungskammer 7 erreicht und insoweit die Betriebssicherheit erhöht. In der Wand des Heißgaszyklons 8 können Störungselemente angeordnet sein, die ebenfalls nicht gezeichnet wurden. Störungselemente können auch in der Mittelachse des Heißgaszyklons 8 und so angeordnet sein, daß sie von der Drallströmung in eine statistischen Gesetzen gehorchende oder in eine schwingende Bewegung versetzt werden. Die Störungselemente dienen dazu, sicherzustellen, daß ein ausreichender Feststoffanteil mit dem Trocknungsgasstrom in das Stromtrocknungsaggregat 3 eingeführt wird. Auch werden ein störungsfreier Materialfluß in dem Heißgaszyklon 8 und damit eine schnelle Erstabkühlung gefördert. Das über die Kühleinrichtung 9 abgezogene, behandelte Gut kann ohne weiteres einer Deponie zugeführt oder wieder eingesetzt werden, was insbesondere für Filtrationsschlamm aus Brauereien gilt.

Gegenstand der Erfindung ist auch die beschriebene Anlage in der Anwendung für die Aufbereitung von Rohkieselgur. Sie ist dadurch gekennzeichnet, daß sie die vorstehend beschriebenen Merkmale aufweist, und zwar mit der Maßgabe, daß anstelle des Filtrationsschlammes Rohkieselgur in körniger, insbes. feinkörniger Struktur eingesetzt wird und mit der weiteren Maßgabe, daß der behandelte Rohkieselgur als Filtrationshilfsmittel verwendet wird.

## Patentansprüche

1. Anlage für die Aufbereitung eines hauptsächlich aus Kieselgur bestehenden mechanisch entwässerten Filtrationsschlammes, der Kieselgur einer vorgegebenen Kornverteilung, organische Bestandteile und ggf. geblähtes Perlite oder Vermiculite enthält, - mit

    einer Aufgabeeinrichtung für den in ausreichend feiner Verteilung aufzugebenden Filtrationsschlamm,

    einem Stromtrocknungsaggregat für die Trocknung und Dispergierung des aufgegebenen Filtrationsschlammes in einem Trocknungsgasstrom,

    einem aus einem Zyklonaggregat und einem Feststofffilter bestehenden Abscheideraggregat für die Abscheidung des körnigen Trockengutes,

    einer Hochtemperaturbehandlungskammer für die Behandlung des Trockengutes in einem Behandlungsgasstrom,

    einem Heißgaszyklonaggregat für die Abscheidung des zu behandelnden Gutes aus dem Behandlungslungsgasstrom und

    einer Kühleinrichtung für das abgeschiedene, behandelte Gut,

    wobei die Einrichtungen bzw. Aggregate in der beschriebenen Reihenfolge in ein Fließschema eingebunden sind, **dadurch gekennzeichnet,** daß die Hochtemperaturbehandlungskammer (7) als Wirbelstromreaktor ausgeführt ist, der einen vertikalen Reaktionsraum (10) mit kreisförmigem Querschnitt, eine koaxial unter dem Reaktionsraum angeordnete Drallerzeugungseinrichtung (11) für die Einführung des Behandlungsgasstromes und eine koaxial über der Reaktionskammer (10) angeordnete und in diese hineinragende Einführungslanze (12) für das Trockengut aufweist, daß der Hochtemperaturbehandlungskammer (7) ein Behandlungsgaserzeuger (15) vorgeschaltet ist, der eine Brennkammer (14), eine Einrichtung (5) für die Zuführung von flüssigen und/oder gasförmigen Brennstoffen, eine Einrichtung (16) für eine Druckluftzuführung und eine Einrichtung (17) für eine Frischluftzuführung aufweist und der einen Behandlungsgasstrom ausreichender Strömungsenergie mit ausreichender Temperatur und ausreichendem Sauerstoffgehalt zur Verbrennung der organischen Bestandteile besitzt,

daß das Heißgaszyklonaggregat (8) mit einer Auskleidung (18) aus feuerfester Keramik versehen und für eine Feststoffabscheidung von etwa 80 % eingerichtet ist, wobei dem Heißgaszyklonaggregat (8) eine Abschreckkühleinrichtung (19) für die abgeschiedenen Feststoffe nachgeschaltet ist, die zwischen dem Heißgaszyklonaggregat (8) und der Kühleinrichtung (9) angeordnet ist,

daß der Heißgasabzug des Heißgaszyklonaggregates (8) über ein Überführungsleitungssystem (20) an das Stromtrocknungsaggregat (3) angeschlossen und das aus dem Heißgaszyklonaggregat (8) abgehende Heißgas mit seinem Feststoffanteil von etwa 20 % als Trocknungsgasstrom in das Stromtrocknungsaggregat (3) einführbar ist und

daß das Überführungsleitungssystem (2) eine mit einer Prozeßsteuereinrichtung (21) zusammenmenwirkende Einspritz-Wasserkühlung (22) aufweist, mit der die Temperatur des Trocknungsgasstromes auf eine Einführungstemperatur einstellbar ist, die niedrig genug ist, um eine Verdampfung der im Filterschlamm mitgeführten Bestandteile im Stromtrocknungsaggregat (3) zu verhindern.

2. Anlage nach Anspruch 1, dadurch gekennzeichnet, daß die Hochtemperaturbehandlungskammer (7) einen im Vertikalschnitt birnenförmigen Reaktionsraum (10) sowie eine Drallerzeugungseinrichtung (11) und einen Gasaustritt (23) mit demgegenüber reduziertem Querschnitt aufweist.

3. Anlage nach einem der Ansprüche 1 oder 2, dadurch gekennzeichnet, daß die Hochtemperaturbehandlungskammer mit einem Behandlungsgas einer Temperatur von etwa 600 °C betreibbar ist.

4. Anlage nach einem der Ansprüche 1 bis 3, dadurch gekennzeichnet, daß das Heißgaszyklonaggregat (8) eine Abschreckkühleinrichtung (19) aufweist, die als wassergekühlte Schurre oder Wendel ausgerüstet ist.

5. Anlage nach einem der Ansprüche 1 bis 4, dadurch gekennzeichnet, daß die mit dem Überführungsleitungssystem (20)verbundene Einspritz-Wasserkühlung (22) einen Regelkreis für die Temperatur des Trocknungsgasstromes aufweist.

6. Anlage nach einem der Ansprüche 1 bis 5, dadurch gekennzeichnet, daß das Stromtrocknungsaggregat im Bereich vor dem Zyklonaggregat (4) eine Prallumlenkung (5) zur Agglomeratzerstörung aufweist.

7. Anlage für die Aufbereitung von Rohkieselgur, dadurch gekennzeichnet, daß sie die Merkmale nach den Ansprüchen 1 bis 6 aufweist, und zwar mit der Maßgabe, daß anstelle des Filtrationsschlammes Rohkieselgur in körniger, insbes. feinkörniger Struktur eingesetzt wird und mit der weiteren Maßgabe, daß der behandelte Rohkieselgur als Filtrationshilfsmittel verwendet wird.

8. Verfahren zum Betrieb einer Anlage nach einem der Ansprüche 1 bis 6, dadurch gekennzeichnet, daß bei Einsatz von Filtrationsschlämmen unterschiedlicher Provenienz, die z. B. aus unterschiedlichen Betrieben abgezogen werden, die Filtrationsschlämme durch Mischung auf eine anlagentypische Zusammensetzung normiert und danach in das Stromtrocknungsaggregat eingeführt werden.

**Claims**

1. An installation for the processing of mechanically dewatered filtration sludge mainly comprising kieselguhr, which contains kieselguhr of a predetermined grain size distribution, organic constituents, and possibly blown perlite or vermiculite, with

a feeding device for the filtration sludge to be fed in sufficiently finely distributed,

a stream drying unit for drying and dispersing the input filtration sludge in a drying gas stream,

a separator unit comprising a cyclone unit and a solids filter for separating the dried, granular material,

a high-temperature treatment chamber for the treatment of the dried material in a treatment gas stream,

a hot gas cyclone unit for separating the treated material from the treatment gas stream, and

a cooling device for the separated, treated material,

wherein the devices or units are connected in the described sequence in a flow scheme, characterised in that the high-temperature treatment chamber (7) is constructed as a fluidised-bed reactor, which has a vertical reaction space (10) with a circular cross-section, a spin-producing device (11) arranged coaxially below the reaction space for the introduction of the treatment gas stream and a delivery lance (12) for the dried material arranged coaxially above the reaction space (10) projecting into the latter,

that a treatment gas generator (13) is disposed in series upstream of the high-temperature treatment chamber (7), which treatment gas generator has a combustion chamber (14), a device (15) for feeding in liquid and/or gaseous fuels, a device (16) for feeding in compressed air and a device (17) for feeding in fresh air, and which has a treatment gas stream of sufficient energy of flow, sufficient temperature and sufficient oxygen content for the combustion of the organic constituents,

that the hot gas cyclone unit (8) is provided with a lining (18) made of refractory ceramic and is adjusted for a solids separation of about 80 %, wherein a chill-cooling device (19) for the separated solids, which is arranged between the hot gas cyclone unit (8) and the cooling device (9), is disposed downstream of the hot gas cyclone unit (8),

that the hot gas outlet of the hot gas cyclone unit (8) is attached via a transfer line system (20) to the stream drying unit (3) and the hot gas leaving the hot gas cyclone unit (8) with a solids content of about 20 % can be fed into the stream drying unit (3) as a drying gas stream, and

that the transfer line system (20) has a water spray cooler (22) which interacts with a process control device (21) with which the temperature of the drying gas stream can be adjusted to an inlet temperature which is low enough to prevent the vaporisation in the stream drying unit (3) of the constituents fed in with the filtration sludge.

2. An installation according to Claim 1, characterised in that the high-temperature treatment chamber (7) has a reaction space (10) which is pear-shaped in vertical cross-section, and a spin-producing device (11) and a gas outlet (23) which have a reduced cross-section in relation to the reaction space.

3. An installation according to one of Claims 1 or 2, characterised in that the high-temperature treatment chamber can be operated with a treatment gas at a temperature of about 600 °C.

4. An installation according to any one of Claims 1 to 3, characterised in that the hot gas cyclone unit (8) has a chill-cooling device (19) which is equipped as a water-cooled grid or coil.

5. An installation according to any one of Claims 1 to 4, characterised in that the water spray cooler (22) attached to the transfer line system (20) has a control loop for the temperature of the drying gas stream.

6. An installation according to any one of Claims 1 to 5, characterised in that the stream drying unit has an impact deviator (5) in the region upstream of the cyclone unit (4) for the destruction of agglomerates.

7. An installation for the processing of crude kieselguhr, characterised in that it has the characteristics according to Claims 1 to 6, with the stipulation that crude kieselguhr with a granular structure, particularly a fine granular structure, is used instead of the filtration sludge, and with the further stipulation that the treated crude kieselguhr is used as a filtration aid.

8. A process for operating an installation according to any one of Claims 1 to 6, characterised in that when filtration sludges from different sources are used, which are taken from different operations, for example, the filtration sludges are standardised by mixing to give a composition which is typical for the installation and subsequently fed into the stream drying unit.

## Revendications

1. Installation pour traiter une boue de filtration constituée principalement par du kieselgur, déshydratée mécaniquement et qui contient du kieselgur possédant une distribution granulométrique déterminée, des constituants organiques et éventuellement de la perlite ou de la vermiculite expansée, - comportant

un dispositif d'alimentation de la boue de filtration devant être amenée avec une distribution suffisamment fine, une unité de séchage dans un courant de gaz pour réaliser le séchage et la dispersion de la boue de filtration amenée, dans un courant de gaz de séchage,

une unité de séparation constituée par un cyclone et un filtre de séparation des substances solides, pour la séparation de la matière sèche granuleuse,

une chambre de traitement à haute température pour le traitement de la matière sèche dans un courant de gaz de traitement,

un cyclone à gaz chaud pour séparer la matière devant être traitée, du courant de gaz de traitement, et

un dispositif de refroidissement pour la matière séparée et traitée,

et dans laquelle les dispositifs ou unités sont réunis dans l'ordre indiqué selon un schéma fonctionnel, caractérisée en ce que la chambre de traitement à haute température (7) est agencée sous la forme d'un réacteur à écoulement tourbillonnaire, qui possède une enceinte réactionnelle verticale (10) possédant une section transversale circulaire, un dispositif (11) de production de tourbillons, qui est disposé coaxialement au-dessous de l'enceinte réactionnelle et sert à introduire le courant de gaz de traitement, et une lance (12) d'introduction de la matière sèche, qui est disposée coaxialement au-dessous de l'enceinte réactionnelle (10) et pénètre dans cette dernière,

qu'en amont de la chambre de traitement à haute température (7) est monté un générateur de gaz de traitement (15), qui possède une chambre de combustion (14), un dispositif (5) pour envoyer des combustibles liquides et/ou gazeux, un dispositif (16) pour délivrer de l'air comprimé et un dispositif (17) pour délivrer de l'air frais, et fournit un courant de gaz de traitement possédant une énergie d'écoulement suffisante avec une température suffisante et une teneur en oxygène suffisante pour réaliser la combustion des composants organiques,

que le cyclone à gaz chaud (8) est pourvu d'un habillage (18) formé d'une céramique réfractaire et est agencé pour réaliser une séparation des substances solides, à environ 80 %, tandis qu'en aval du cyclone à gaz chaud (8) est monté un dispositif (19) de refroidissement par trempe pour les substances solides séparées, qui est disposé entre le cyclone à gaz chaud (8) et le dispositif de refroidissement (9),

que l'évacuation du gaz chaud du cyclone à gaz chaud est raccordée à l'unité (3) de séchage dans un courant de gaz, par l'intermédiaire d'un système de canalisation de transfert (20) et que le gaz chaud, qui sort du cyclone à gaz chaud (8), peut être introduit, avec son pourcentage d'environ 20 % de substances solides, en tant que courant de gaz de séchage, dans l'unité (3) de séchage dans un courant de gaz, et

que le système de canalisation de transfert (2) possède une unité de refroidissement à injection d'eau (22), qui coopère avec un dispositif de commande de processus (21) et au moyen duquel la température du courant de gaz de séchage est réglable à une température d'entrée suffisamment faible pour empêcher une vaporisation des composants, entraînés dans la boue de filtration, dans l'unité (3) de séchage dans un courant de gaz.

2. Installation selon la revendication 1, caractérisée en ce que la chambre de traitement à haute température (7) possède une enceinte réactionnelle (10) en forme de poire en coupe transversale, ainsi qu'un dispositif de production de tourbillons (11) et une sortie (23) pour le gaz, possédant une section transversale réduite par rapport à celle de ce dispositif.

3. Installation selon l'une des revendications 1 ou 2, caractérisée en ce que la chambre de traitement à haute température peut fonctionner avec un gaz de traitement possédant une température d'environ 600°C.

4. Installation selon l'une des revendications 1 à 3, caractérisée en ce que le cyclone à gaz chaud (8) possède un dispositif (19) de refroidissement par trempe, qui est agencé sous la forme d'une goulotte ou d'un serpentin refroidi par eau.

5. Installation selon l'une des revendications 1 à 4, caractérisée en ce que le dispositif de refroidissement à injection d'eau (22), qui est raccordé au système de canalisation de transfert (20), possède un circuit de régulation de la température du courant de gaz de séchage.

6. Installation selon l'une des revendications 1 à 5, caractérisée en ce que l'unité de séchage dans un courant de gaz possède, dans la zone située en amont du cyclone (4), un dispositif à chicanes (5) pour détruire l'agglomérat.

7. Installation pour le traitement de kieselgur brut, caractérisée en ce qu'elle possède les caractéristiques des revendications 1 à 6, et ce avec la condition selon laquelle à la place de la boue de filtration, on utilise du kieselgur brut sous la forme d'une structure granuleuse et notamment à grains fins, et avec la condition supplémentaire selon laquelle on utilise le kieselgur brut traité en tant qu'agent auxiliaire de filtration.

8. Procédé pour faire fonctionner l'installation selon l'une des revendications 1 à 6, caractérisé en ce que dans le cas d'utilisation de boues de filtration de provenances différentes, qui sont prélevées par exemple d'entreprises différentes, les boues de filtration sont normalisées, par mélange, à une composition typique pour l'installation et sont envoyées ensuite à l'unité de séchage dans un courant de gaz.

*Fig. 1*

EP 0 418 847 B1

Fig. 2

12

23

7

10

B

B

11

Fig. 3

7

11